Europäisches Patentamt

European Patent Office

Office européen des brevets

(11) Publication number: **0 420 771 A1**

## (12) EUROPEAN PATENT APPLICATION

(21) Application number: 90420415.3

(22) Date of filing: 19.09.90

(51) Int. Cl.⁵: **D21C 11/00, D21C 3/20**

(30) Priority: **27.09.89 US 413148**

(43) Date of publication of application:
**03.04.91 Bulletin 91/14**

(84) Designated Contracting States:
**GR**

(71) Applicant: **EASTMAN KODAK COMPANY**
**343 State Street**
**Rochester, New York 14650(US)**

(72) Inventor: **Harris, Judy Kiefer, c/o EASTMAN**
**KODAK COMPANY**
**Patent Department 343 State Street**
**Rochester New York 14650-2201(US)**
Inventor: **Partin, Lee Reynolds, c/o EASTMAN**
**KODAK COMPANY**
**Patent Department 343 State Street**
**Rochester New York 14650-2201(US)**

(74) Representative: **Parent, Yves et al**
**Kodak-Pathé Département Brevets et**
**Licences CRT 60/1 -Zone Industrielle**
**F-71102 Chalon-sur-Saône Cédex(FR)**

(54) Isolation of lignin from solvent pulping liquors.

(57) A method of isolating lignin from a solvent pulping liquor containing lignin and a lower alcohol
solvent, comprising the steps of:
    (1) continuously adding solvent pulping liquor to a
stripping column,
    (2) heating the pulping liquor in the stripping
column to produce an alcohol-rich overhead vapor
stream and a residual slurry comprising lignin,
    (3) continuously withdrawing the overhead vapor
stream from the stripping column, and
    (4) isolating the residual slurry.

## ISOLATION OF LIGNIN FROM SOLVENT PULPING LIQUORS

Field of Invention

The invention relates to the isolation of lignin and wood sugars from solvents used to extract lignin and wood sugars from wood pulp. More specifically, the present invention is directed to a process designed to prevent direct heating of the precipitating lignin.

Background of the Invention

Wood pulp for the preparation of paper may be prepared by mechanical or chemical processes. Wood pulps contain significant amounts of lignin and hemicellulose in addition to the basic cellulose component of the fibers. The production of paper having a reduced opacity and longer, less damaged fibers as well as improved strength requires removal of the lignin and hemicellulose from the wood pulp prior to paper making.

Lignin is a major constituent of the woody structure of higher plants and may be found in the cell walls and intercellular spaces of the wood structure. Lignin may constitute as much as 70% or more of the solid materials which constitute the wood. Lignin acts as a cementing agent to bind the matrix of cellulose fibers together into a rigid woody structure. In order to free the cellulose fibers from the lignin, the wood-pulp industry employs chemical processes to liberate the lignin and hemicellulose from the wood cellulose fiber. Conventional pulping processes include the sulfitepulping process in which wood pulp is digested under pressure in a solution of sulfurous acid and either calcium, magnesium, sodium or ammonium bisulfite.

During the pulping process, lignin is dissolved away from the cellulose fibers and the resulting sulfite lignins may be present in the pulp liquor at a solids content of 40-60%.

Alkali lignins are obtained from craft and soda pulping processes in which wood is heated with a sodium hydroxide and, optionally, sodium sulfide pulping solution. The alkali lignins produced by these processes are present in the pulping liquor in concentrations from 25-30% solids.

Solvent pulping of wood can also be used to extract lignin and wood sugars from the wood pulp. The solvent is generally a low aliphatic alcohol/water mixture such as methanol/water or ethanol/water. The pulping liquor obtained from the extraction process contains lignin and wood sugars in the solvent. In such processes, it is desirable to recover the solvent for recycle and the lignin and sugars for commercial sale or for fuel sources. When the solvent is recovered by simple evaporation, the pulp liquors are concentrated resulting in sticky or tarry products which can precipitate and cause equipment fouling.

U.S. 4,100,016 discloses a process in which evaporation is conducted by steam stripping in a baffle-tray column at subatmosphere pressure. In such a process, the steam which is added in the stripping process must be removed by evaporation in further downstream processing steps if it is desirable to concentrate the sugars. The use of subatmospheric pressure can increase the difficulty and/or cost of condensing the evaporated overhead vapors.

Accordingly, a need exists for an improved process of isolating lignins and wood sugars from solvent pulping liquors which does not result in equipment fouling and yet is economical and allows for the continuous efficient solvent extraction of lignin and wood sugars from wood pulp liquors.

## SUMMARY OF THE INVENTION

Accordingly, one object of the present invention is to provide a process for isolating lignins from solvent pulping liquors which avoids the direct heating of precipitating lignin and thereby eliminates undesirable equipment fouling.

Another object of the invention is to provide a process for the isolation of lignin from solvent pulping liquors which allows increased temperatures and therefore increased pressures to be used in the isolation process.

These and other objects which will become apparent from the following specification have been achieved by the present method for isolating lignin from a solvent pulping liquor containing lignin, a lower alcohol solvent and optionally water, which comprises

(1) continuously adding solvent pulping ,liquor to a stripping column,

(2) heating the solvent pulping liquor in the stripping column to produce an alcohol-rich overhead vapor stream and a residual slurry comprising lignin,

(3) continuously withdrawing the overhead vapor stream from the stripping column, and

(4) isolating the residual slurry.

DETAILED DESCRIPTION OF THE PREFERRED
EMBODIMENTS

The present process avoids the difficulties which are associated with steam stripping processes such as disclosed in U.S. 4,100,016. By not introducing steam into the lignin recovery process, the additional process steps required to remove the added water are eliminated.

In the present process, the stripping (distillation) column is heated by means of hot solvent vapors from a reboiler vessel which is in fluid communication with the stripping or distillation column. This prevents the introduction of additional water as steam into the process which must be removed in downstream steps such as in the wood sugar or molasses concentration step which may follow the lignin separation step.

When the solvent pulping liquor is directly heated while the lignin is precipitating, the lignin generally forms a viscous precipitate which is difficult to process and may additionally contain solvent and impurities. The present process avoids directly heating the precipitating lignin by heating the stripping column by means of hot vapors which are generated by heating a reboiler or distillation pot. In this way, the precipitating lignin is not directly heated and problems of viscous precipitate formation are avoided. An additional advantage of the present process is the ability to run the separation at higher pressures than prior art processes. The avoidance of direct heat contact in the lignin precipation step allows increased temperatures and therefore increased pressures to be used in the separation process. In prior art processes in which the solvent pulping liquor is directly heated to evaporate solvent, temperatures must be kept relatively low to prevent the lignin from forming the viscous precipitate. Accordingly, reduced pressures are used so that the evaporation may be conducted at lower temperatures. In contrast, the process of the present invention does not directly heat the precipitating lignin and therefore higher temperatures may be utilized with correspondingly higher pressures.

The general process of separating lignin from cellulose with solvents is well known. Solvents which can be used to remove lignin from cellulose include $C_{1-4}$ aliphatic alcohols and aqueous mixtures or solutions of $C_{1-4}$ aliphatic alcohols. The alcohol solvent must be more volatile than water so that the alcohol solvent may be efficiently separated as an overhead stream from the aqueous mixture containing the precipitating lignin in the distillation column. Accordingly, lower alcohols such as methanol (BP = 64.6°C), ethanol (BP = 78°C), isopropanol (BP = 82°C), n-propanol (BP = 97°C), n-butanol (BP = 98°C) and tert-butanol (BP = 83°C) or mixtures thereof may be used.

Preferably, ethanol or methanol is used due to availability and because of the relative ease of solvent recovery.

The solvent extraction may be carried out using a wide range of water/alcohol solutions from as little as 20 wt % to as high as 80 wt % alcohol in water. Lignins are generally insoluble in water and therefore a minimum amount of alcohol is required in the initial solvent pulping liquor.

The solvent pulping liquor which serves as the raw material feedstock for the present isolation method will, therefore, comprise lignins and sugars dissolved in an aqueous mixture of a lower alcohol. As the lower alcohol is stripped away from the aqueous mixture in the stripping column, the lignin precipitates from the aqueous solution and descends through the stripping column to the reboiler or distillation pot. Since the precipitation of the lignin occurs in the distillation column, there is no direct heating of a precipitating lignin and little or no viscous precipitate formation.

The isolation/separation process of the present invention is conducted in an apparatus having a stripping (distillation) column and a reboiler vessel in fluid communication with the stripping column. The column may have known internal packing materials or internal structure so long as the internal structure does not impede the downward flow of the precipitated lignin in the residual slurry. The apparatus may also comprise an intermediate settling tank positioned to accept the residual lignin slurry from the stripping column, the settling tank then being in fluid communication with the reboiler and the reboiler in fluid communication with the stripping column. The stripping column, settling tank and reboiler may be made of any suitable material which is not subject to corrosion under the separation conditions. Such materials are well known to those skilled in the art of solvent pulping operations and include stainless steel, for example.

The stripping column and reboiler vessel are conventional pieces of equipment well known to those skilled in the art. The reboiler vessel may conveniently be located directly below the stripping column and a conduit is provided for vapors to pass from the reboiler vessel to the bottom of the stripping column. Also, a conduit is provided for residual lignin slurry to flow from the bottom of the stripping column into the reboiler vessel. Conduits are also provided at the top of the distillation column for vapors to be sent to a condenser, and for pulping liquor to be fed into the column. Means are provided in the lower portion of the reboiler for removing residual lignin slurry.

In the separation process of the present invention, the solvent pulping liquor is continuously added to the stripping column. The solvent pulping liquor may be added to the top of the stripping column or at some intermediate point along the length of the stripping column, in which case a portion of the recovered solvent is fed to the top of the stripping column. The preferred feed point will depend on the solvent used and the desired concentration for recycling the solvent back to the pulping process. The stripping column is in fluid and vapor communication with a reboiler vessel which contains the residual lignin slurry and is at a temperature sufficient to vaporize the alcohol and water in the residual slurry. The reboiler is generally heated to and maintained at reflux temperature. Vapors rising from the heated reboiler vessel enter the bottom of the stripping column and pass upward through the stripping column contacting the solvent pulping liquor which is continuously added to the stripping column. The contact between the hot solvent vapors flowing up from the reboiler and the added solvent pulping liquor in the stripping column results in heat transfer from the rising vapors to the added solvent pulping liquor. The volatile alcohol solvent vapors which result are continuously withdrawn as an overhead vapor stream from the stripping column. As the isolation process proceeds, there is continuous feed of solvent pulping liquor and continuous alcohol vapor take-off of the overhead solvent vapor stream. As a result of the continuous withdrawal of the overhead vapor stream, the residual slurry containing lignin and wood sugars descends through the stripping column and enters the reboiler vessel.

As the alcohol-rich solvent vapor is withdrawn from the top of the stripping column, lignin precipitates in the residual slurry and is therefore present both in solution and as a particulate in the residual slurry. When the desired volume of lignin and wood sugars has been obtained by the continued operation of the stripping process, the residual slurry may be discharged from the reboiler vessel.

The stripping process may be run as a continuous process with continuous discharge of the residual slurry, continuous feed to the solvent pulping liquor and continuous withdrawal of the overhead vapor stream. Alternatively, the process may be run in a semi-batch mode with continuous feed and vapor withdrawal and with batchwise discharge of the residual slurry from the reboiler vessel.

The lignin and aqueous residue containing wood sugars which are present in the discharged residual slurry are separated from each other by conventional solid/liquid separation processes such as, for example, centrifugation, filtration, settling tanks, etc. The process of the present invention has the added benefit of not diluting the wood sugar stream which is separated from the lignin. In steam stripping processes, additional water is added by way of the steam and this water must then be removed from the diluted sugar stream by downstream processing operations. Such operations are eliminated by the process of the present invention which is thereby more economical and energy efficient.

In a second embodiment of the present process, a settling tank is utilized to receive the downflowing solvent pulping liquor which exits the stripping column. The precipitated lignins are allowed to settle in the settling tank and may be continuously or batchwise discharged from the settling tank for further concentration and solid/liquid separation. The settling tank is equipped with an outlet near the top of the tank through which the overflow wood sugar-containing liquid is passed from the settling tank into the reboiler. The overflow liquid is heated in the reboiler which functions to generate hot vapors which pass into the stripping column to facilitate stripping of the alcohol-rich vapors as an overhead stream. The settling tank therefore functions as an intermediate processing tank for the separation and discharge of a lignin slurry from the overall separation apparatus. In this embodiment, the overflow liquid passing from the top of the settling tank into the reboiler contains dissolved wood sugars which are concentrated in the reboiler during the isolation process. The concentrated sugar solution can be discharged or withdrawn from the reboiler for further reprocessing.

The process of the present invention is operated at temperatures which generally range from 20-100° C, preferably 50-80° C. The temperature is adjusted so as to provide a continuous hot vapor stream from the reboiler into the stripping column. The temperature at which the process is operated is dependent upon the specific alcohol used in the solvent extraction process and on the pressure used in the system. As noted above, the reboiler is generally operated at reflux, with the ref lux temperature being adjusted by the pressure in the separation apparatus. The pressure and thereby the temperature of the separation process are adjusted to obtain the most efficient separation in the stripping column. The temperature and pressure are therefore also dependent on the specific column structure such as column height, internal packing, etc. These engineering adjustments are routine and the optimum conditions can be readily determined by one skilled in the art. For solvent pulping liquors containing methanol, the temperature is preferably in the range 60-70° C and the separation apparatus may be run at atmospheric pressure.

Generally, the present process is operated at atmospheric pressure or subatmospheric pressures to reduce the decomposition of the lignin slurry and carmeling of the wood sugar solution. The process may also be run at pressures slightly above atmospheric pressure although suitable precautions to avoid thermal decomposition of the lignin solution and wood sugar solutions must be taken.

In the process of the present invention, process parameters such as temperature, pressure, column length, solvent alcohol, the rate of solvent pulping liquor feed and withdrawal of the overhead vapor stream and lignin slurry are all adjusted so as to obtain an efficient stripping of the alcohol from the solvent pulping liquor in the stripping column. Additional considerations include the possibility of azeotropic distillation, such as occurs with ethanol and water.

Column efficiency is also dependent on the specific alcohol and more specifically on the difference between the boiling point of the solvent alcohol and water. For alcohols having a boiling point much lower than water, i.e. methanol, a shorter column may be utilized. On the other hand, for alcohols having a boiling point near that of water, such as for example 1-propanol, a longer column may be necessary or a column having internals to increase the number of theoretical plates in the distillation/stripping process.

The precipitated lignin present in the residual slurry of the reboiler or settling tank may be isolated by conventional solid/liquid separation techniques. The filtrate obtained by the solid/liquid separation may be recycled to the stripping column to increase the lignin yield. When using both a settling tank and a reboiler, the filtrate from the settling tank may be combined with the overflow mixture exiting the settling tank and entering the reboiler or may be recycled to the stripping column as noted above. Recycling may be conducted continuously and the volume of recycled liquid may be adjusted according to known engineering considerations.

Other features of the invention will become apparent according to the following descriptions of the exemplary embodiments which are given for illustration of the invention and are not intended to be limiting thereof.

Example

A solvent pulping liquor is continuously fed into the top of a stripping column. Temperature of the liquor is 50°C. The liquor contains lignin wood sugars and methanol/water as a solvent. A reboiler containing residual lignin slurry in fluid communication with the stripping column is heated to a temperature of 70°C, and the vapors therefrom pass up through the stripping column, stripping solvent from the pulping liquor. The solvent vapors are continuously withdrawn as an overhead vapor stream. The residual slurry containing lignin and wood sugars descends through the stripping column and enters the reboiler vessel. The lignin precipitates in the residual slurry, and is separated therefrom.

Obviously, numerous modifications and variations of the present invention are possible in light of the above teachings. It is therefore to be understood that within the scope of the appended claims, the invention may be practiced otherwise than as specifically described herein.

**Claims**

1. A method for isolating lignin from a solvent pulping liquor containing lignin and a lower alcohol solvent, characterized by

(a) continuously adding solvent pulping liquor to a stripping column,

(b) heating the pulping liquor in the stripping column to produce an alcohol-rich overhead vapor stream and a residual slurry comprising lignin,

(c) continuously withdrawing the overhead vapor stream from the stripping column, and

(d) isolating the residual slurry.

2. The method of Claim 1, wherein said lower alcohol is a member selected from the group consisting of methanol, ethanol, isopropanol, n-propanol, n-butanol, 2-butanol and tert-butanol.

3. The method of Claim 1, wherein said solvent pulping liquor further comprises water.

4. The method of Claim 1, wherein said solvent pulping liquor comprises 20-100% of said lower alcohol.

5. The method of Claim 1, wherein said residual slurry flows from said stripping column into a reboiler vessel in fluid and vapor communication with said stripping column, and wherein said residual slurry is isolated from said reboiler vessel.

6. The method of Claim 1, wherein said residual slurry flows from said stripping column into a settling tank, said settling tank being in fluid communication with said stripping column and in fluid communication with a reboiler vessel, said reboiler vessel being in vapor communication with stripping column, and wherein said residual slurry is isolated from said settling tank.

7. The method of Claim 1, wherein said heating is conducted at a temperature from 20-100°C.

8. The method of Claim 7, wherein said temperature is conducted at a temperature in the range from 50-80°C.

9. The method of Claim 1, wherein said method is conducted at atmospheric pressure or subatmospheric pressures.

10. The process of Claim 1, wherein said alcohol is methanol or ethanol.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 100 016 (DIEBOLD ET AL.)<br>* column 2, line 38-68; column 8, line45 - column 9, line 61 *<br>- - - | 1-4,7,9,<br>10 | D 21 C 11/00<br>D 21 C 3/20 |
| A | US-A-3 585 104 (KLEINERT T.N.)<br>* column 3, line 25 - column 4, line 15; claims 2, 3, 6 *<br>- - - - - | 1-4,10 | |
| | | | TECHNICAL FIELDS SEARCHED (Int. Cl.5)<br><br>D 21 C |

The present search report has been drawn up for all claims

| Place of search | Date of completion of search | Examiner |
|---|---|---|
| The Hague | 15 January 91 | BERNARDO NORIEGA F. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document